# FASCICULE DE BREVET EUROPEEN

(11) **EP 1 005 183 B1**
(45) Date de publication et mention de la délivrance du brevet: **08.05.2002**
(21) Numéro de dépôt: 99402843.9
(22) Date de dépôt: 17.11.1999
(51) Int. Cl.: H04B 10/18

(54) **Suppression de l'effet raman par modulation de la polarisation**
Ramaneffektunterdrückung durch Polarisationsmodulation
Raman effect supression by polarisation modulation

(30) Priorité: 26.11.1998 FR 9814054
(43) Date de publication de la demande: 31.05.2000
(73) Titulaire: ALCATEL, 75008 Paris (FR)
(72) Inventeur: Blondel, Jean-Pierre, 78530 Buc (FR); Brandon, Eric, 92340 Bourg La Reine (FR)
(74) Mandataire: Lamoureux, Bernard

(56) Documents cités:
- EP-A- 0 782 283
- GB-A- 2 318 646
- US-A- 5 345 331
- PATENT ABSTRACTS OF JAPAN vol. 099, no. 001, 29 janvier 1999 (1999-01-29) & JP 10 285144 A (KOKUSAI DENSHIN DENWA CO LTD <KDD>;K D D KAITEI CABLE SYST KK), 23 octobre 1998 (1998-10-23)

## Description

La présente invention concerne le domaine des transmissions par fibres optiques. L'invention concerne tout particulièrement les liaisons dites "sans répéteurs". Ces liaisons sont définies par le fait qu'elles n'utilisent des éléments électriquement actifs que dans les terminaux d'extrémité.

Les liaisons par fibre optique sans répéteurs présentent la particularité de nécessiter, pour atteindre de grandes distances, l'injection dans la fibre optique de très fortes puissances optiques. Deux types d'ondes optiques sont injectés dans la fibre. Le premier type est l'onde de signal, à environ 1550 nm, qui est modulée et porte l'information à transmettre. Le deuxième type d'onde optique est l'onde optique dite de pompe, dans la plage de longueur d'onde 1400-1500 nm, qui est une puissance continue injectée dans la fibre optique, de façon à amplifier le signal.

De nombreuses variantes existent pour l'utilisation de cette onde de pompe. L'onde de pompe peut être émise depuis le terminal d'émission ou depuis le terminal de réception. Le schéma le plus courant consiste à placer un morceau de fibre dopée dans la liaison à quelques dizaines de km du terminal d'où est émise l'onde de pompe. Cette fibre dopée est activée par l'onde optique de pompe et amplifie le signal. L'onde de pompe peut être injectée dans la même fibre optique que celle qui transporte le signal ou être injectée dans une fibre optique séparée. Les deux techniques peuvent être combinées. Si les ondes de signal et de pompe sont sur la même fibre, l'onde de pompe amplifie le signal par effet Raman, ce qui est, jusqu'à un certain niveau de puissance de pompe, bénéfique.

Il est recherché d'utiliser de très fortes puissances de signal et de pompe (de l'ordre de grandeur du Watt) afin de permettre l'augmentation de la portée de la liaison. Cependant, la puissance de signal et la puissance de pompe qui peuvent être injectées sont limitées par plusieurs effets non-linéaires, notamment l'effet Brillouin, l'effet Kerr et l'effet Raman. Ces effets sont décrits dans l'ouvrage de G.P. Agrawal, Nonlinear Fibre Optics, Academic Press 1980. L'effet Raman dans une telle liaison sans répéteurs, se traduit par une conversion d'une partie de l'énergie du signal à 1550 nm en bruit autour de 1650 nm.

A. Hadjifotiou, The performance limits of unrepeated systems, Suboptic '93, 29 March - 2 April 1993, Versailles, France évoque la limitation par divers effets non linéaires; pour ce qui est de l'effet Raman (en anglais Stimulated Raman Scattering), cette publication propose simplement une valeur de seuil pour la puissance à l'émission, correspondant à la valeur de puissance à l'émission pour laquelle la puissance décalée en fréquence par effet Raman (puissance de Stokes) est égale à la puissance du signal en sortie de fibre.

La valeur de puissance correspondante est supérieure à la valeur des puissances couramment transmises dans les liaisons sans répéteurs.

R. H. Stolen, Polarization effects in fiber Raman and Brillouin lasers, Journal of Quantum Electronics, vol. QE-15 no. 10, Octobre 1979 décrit que les gains Raman et Brillouin sont deux fois plus élevés dans des fibres lorsque la polarisation est maintenue. Dans des fibres typiques longues, qui ne maintiennent pas une polarisation linéaire, le gain Raman prend une valeur qui est environ deux fois plus faible que dans le cas d'une polarisation linéaire constante. Cet article propose une explication et une démonstration expérimentale de ce fait, dans le but d'obtenir pour des lasers un fort gain Raman.

Un tel brouilleur de polarisation est utilisé dans un système de transmission avec répéteurs, tel que divilgué dans EP-A-782283.

GB-A-2 307 368 décrit un brouilleur de polarisation, pour un système de transmission à multiplexage en longueurs d'onde, et à répéteurs. Il est proposé dans ce système de faire en sorte que des longueurs d'ondes adjacentes dans le peigne de longueurs d'onde présentent des polarisations orthogonales, ou à tout le moins différentes, de sorte à diminuer les effets du mélange à quatre ondes entre les signaux des longueurs d'onde adjacentes.

De la sorte, dans l'état de la technique, les puissances injectées dans les liaisons sans répéteurs sont inférieures à la puissance de seuil pour l'effet Raman. Cet effet n'est donc généralement pas perçu comme pénalisant.

L'invention propose une solution permettant d'augmenter la puissance dans une liaison sans répéteurs. Elle va à l'encontre du préjugé général dans l'état de la technique, en proposant d'utiliser une puissance d'entrée dans un système sans répéteur qui est supérieure à la valeur de seuil de puissance pour l'effet Raman, et qui s'approche de la limite de puissance de la fibre.

Plus précisément, l'invention propose un système de transmission à fibres optiques sans répéteurs caractérisé en ce qu'il présente des moyens de brouillage de la polarisation des ondes lumineuses injectées dans le système.

Dans un mode de réalisation, les moyens de brouillage de la polarisation brouillent la polarisation des ondes transportant l'information.

De préférence, les moyens de brouillage de la polarisation brouillent la polarisation des ondes de pompe.

Avantageusement, les moyens de brouillage de la polarisation brouillent la polarisation dans le domaine temporel.

Dans ce cas, les moyens de brouillage de la polarisation peuvent comprendre un brouilleur de polarisation à haute fréquence.

Dans un autre mode de réalisation, les moyens de brouillage de la polarisation comprennent un brouilleur de polarisation à basse fréquence.

Avantageusement, les moyens de brouillage de la polarisation brouillent la polarisation dans le domaine spatial.

Dans ce cas, les moyens de brouillage de la polarisation peuvent comprendre un dispositif passif biréfringent.

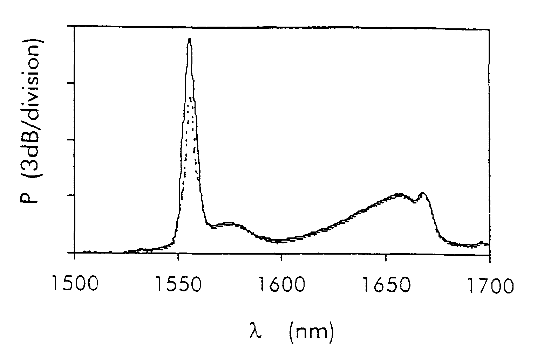

D'autres caractéristiques et avantages de l'invention apparaîtront à la lecture de la description qui suit de modes de réalisation de l'invention, donnée à titre d'exemple et en référence aux dessins annexés, dans lesquels la figure unique montre un graphe de la densité spectrale de puissance, dans un système de transmission sans répéteurs selon l'invention et selon l'art antérieur.

L'invention propose, dans un système de transmission à fibres optiques sans répéteurs, de brouiller la polarisation des ondes lumineuses injectées de sorte à limiter le transfert d'énergie par effet Raman. Elle permet ainsi d'augmenter la puissance injectée dans la liaison. Elle s'applique à tous les types d'ondes lumineuses : signal, ou signaux dans le cas d'un multiplex en longueurs d'onde, pompe, ou les deux.

La figure montre un graphe de la puissance en fonction de la longueur d'onde; les abscisses sont graduées en nanomètres, et les ordonnées à raison de 3 dB par division. On a représenté sur la figure la puissance après 100 km de propagation dans une fibre à coeur en silice pure (fibre PSCF ou "pure silica core fiber"). Le trait pointillé correspond à un système de transmission sans brouillage de polarisation, et le trait plein montre la puissance dans le cas d'un système de transmission selon l'invention, avec des moyens de brouillage de la polarisation; ces moyens, dans l'exemple de la figure, sont constituées d'un brouilleur de polarisation qui effectue la rotation à haute fréquence de la polarisation du signal à 1555 nm.

Dans le cas de la figure, le signal injecté à une longueur d'onde de 1555 nm est transformé en bruit autour de 1650 nm par effet Raman. On constate sur la figure que pour un même niveau de bruit autour de 1650 nm, la puissance à la longueur d'onde du signal - autour de 1555 nm - est de l'ordre de trois dB supérieure dans le cas du système de l'invention à la puissance sans brouillage de la polarisation.

L'invention permet ainsi d'injecter dans un système de transmission à fibres optiques sans répéteurs des puissances supérieures à celles couramment utilisées.

Les moyens de brouillage de la polarisation utilisés selon l'invention peuvent être de tout type, et notamment peuvent agir dans le domaine temporel comme dans le domaine spatial.

Dans le domaine temporel, on peut utiliser pour la mise en oeuvre de l'invention des brouilleurs de polarisation à haute fréquence, comme des brouilleurs de polarisation à basse fréquence.

Les brouilleurs de polarisation à basse fréquence modulent les signaux lumineux à une fréquence de l'ordre de quelques dizaines à quelques centaines de kHz. On considère généralement que ces brouilleurs dégradent la qualité de la transmission. De façon surprenante, ils permettent selon l'invention une nette augmentation de la puissance injectée.

Les brouilleurs de polarisation à haute fréquence modulent les signaux lumineux à une fréquence qui est au moins deux fois supérieure au débit; ils induisent en conséquence un élargissement du spectre du signal transmis. Ceci ne pose pas de problèmes dans le cas des liaisons avec répéteurs, dans lesquelles les filtres sont larges. Pour des liaisons sans répéteurs, comme celles de l'invention, sont prévues des filtres de réception aussi étroits que possibles, et l'utilisation de brouilleurs de polarisation à haute fréquence va à l'encontre des préjugés de l'homme du métier. De fait l'élargissement du spectre induit pour l'homme du métier une dégradation de la sensibilité de la liaison.

Il s'avère néanmoins, de façon surprenante, que l'utilisation de brouilleurs de polarisation à haute fréquence, même avec un filtre de réception plus large, permet selon l'invention d'améliorer les performances de la liaison. L'invention propose à cette fin d'utiliser en réception un filtre élargi pour tenir compte de l'existence du brouillage de polarisation; un filtre qui est au moins aussi large que la modulation appliquée convient. Pour des signaux à 1555 nm, avec un débit de 10 Gbit/s, on peut typiquement pour brouiller la polarisation appliquer une modulation haute fréquence autour de 20 GHz. Dans ce cas, le filtre de réception présente avantageusement une largeur de l'ordre de 0,5 nm, à comparer à une largeur de 0,3 nm dans un système de l'art antérieur.

Plus schématiquement, l'élargissement du filtre de réception, de l'ordre d'un facteur deux, induit une perte de l'ordre de 0,5 dB; l'augmentation de la puissance injectée grâce à l'invention est de l'ordre de 3 dB, ce qui compense largement les pertes dues à un filtre de réception plus large.

Dans le domaine spatial, on peut procéder au brouillage de la polarisation par tous les moyens connus, et notamment en utilisant des dispositifs passifs biréfringents permettant de dépolariser la lumière.

Les dispositifs de brouillage de polarisation dans le domaine temporel sont généralement placés en début de liaison. On peut placer les dispositifs passifs biréfringents en début de liaison comme au cours de celle-ci.

De préférence, le brouillage de polarisation est effectué avant que le transfert d'énergie par effet Raman n'ait eu lieu; pour une liaison sans répéteurs, le brouillage de polarisation a donc de préférence lieu au tout début de la liaison.

L'invention a été décrite en référence à la figure dans son application à un signal à 1550 nm. Elle s'applique aussi à un signal de pompe, par exemple à un signal de pompe autour de 1480 nm; elle permet aussi dans ce cas un gain de l'ordre de 3 dB sur la puissance injectée dans la liaison; dans ce cas, il n'est pas utile de modifier la largeur du filtre utilisé en réception.

## Revendications

1. Un système de transmission à fibres optiques sans répéteurs **caractérisé en ce qu'**il présente des moyens de brouillage de la polarisation des ondes lumineuses injectées dans le système.

2. Le système selon la revendication 1, **caractérisé en ce que** les moyens de brouillage de la polarisation brouillent la polarisation des ondes transportant l'information.

3. Le système selon la revendication 1 ou 2, **caractérisé en ce que** les moyens de brouillage de la polarisation brouillent la polarisation des ondes de pompe.

4. Le système selon la revendication 1, 2 ou 3, **caractérisé en ce que** les moyens de brouillage de la polarisation brouillent la polarisation dans le domaine temporel.

5. Le système selon la revendication 4, **caractérisé en ce** les moyens de brouillage de la polarisation comprennent un brouilleur de polarisation à haute fréquence.

6. Le système selon la revendication 4, **caractérisé en ce** les moyens de brouillage de la polarisation comprennent un brouilleur de polarisation à basse fréquence.

7. Le système selon l'une des revendications 1 à 4, **caractérisé en ce** les moyens de brouillage de la polarisation brouillent la polarisation dans le domaine spatial.

8. Le système selon la revendication 7, **caractérisé en ce** les moyens de brouillage de la polarisation comprennent un dispositif passif biréfringent.

## Claims

1. A repeaterless optical fiber transmission system **characterized in that** it has polarization scrambling means for scrambling the polarization of the lightwaves injected into the system.

2. The system according to claim 1, **characterized in that** the polarization scrambling means scramble the polarization of the information-carrying waves.

3. The system according to claim 1 or 2, **characterized in that** the polarization scrambling means scramble the polarization of the pump waves.

4. The system according to claim 1, 2, or 3, **characterized in that** the polarization scrambling means scramble polarization in the time domain.

5. The system according to claim 4, **characterized in that** the polarization scrambling means comprise a high frequency polarization scrambler.

6. The system according to claim 4, **characterized in that** the polarization scrambling means comprise a low frequency polarization scrambler.

7. The system according to any one of claims 1 to 4, **characterized in that** the polarization scrambling means scramble polarization in the space domain.

8. The system according to claim 7, **characterized in that** the polarization scrambling means comprise a passive birefringent device.

## Patentansprüche

1. Übertragungssystem mit optischen Fasern ohne Repeater, **dadurch gekennzeichnet, daß** es Mittel zum Stören der Polarisation der in das System eingespeisten Lichtwellen aufweist.

2. System nach Anspruch 1, **dadurch gekennzeichnet, daß** die Mittel zum Stören der Polarisation die Polarisation der die Information befördernden Wellen stören.

3. System nach Anspruch 1 oder 2, **dadurch gekennzeichnet, daß** die Mittel zum Stören der Polarisation die Polarisation der Pumpwellen stören.

4. System nach Anspruch 1, 2 oder 3, **dadurch gekennzeichnet, daß** die Mittel zum Stören der Polarisation die Polarisation im Zeitbereich stören.

5. System nach Anspruch 4, **dadurch gekennzeichnet, daß** die Mittel zum Stören der Polarisation einen Hochfrequenz-Polarisationsstörer umfassen.

6. System nach Anspruch 4, **dadurch gekennzeichnet, daß** die Mittel zum Stören der Polarisation einen Niederfrequenz-Polarisationsstörer umfassen.

7. System nach einem der Ansprüche 1 bis 4, **dadurch gekennzeichnet, daß** die Mittel zum Stören der Polarisation die Polarisation im Raumbereich stören.

8. System nach Anspruch 7, **dadurch gekennzeichnet, daß** die Mittel zum Stören der Polarisation eine passive doppelbrechende Vorrichtung umfassen.
